(19) **Europäisches Patentamt / European Patent Office / Office européen des brevets**

(11) **EP 3 311 326 B1**

(12) **FASCICULE DE BREVET EUROPEEN**

(45) Date de publication et mention de la délivrance du brevet:
**27.02.2019 Bulletin 2019/09**

(51) Int Cl.:
***G06F 21/83*** *(2013.01)*   ***G06F 21/86*** *(2013.01)*

(21) Numéro de dépôt: **16731117.4**

(22) Date de dépôt: **17.06.2016**

(86) Numéro de dépôt international:
**PCT/EP2016/064089**

(87) Numéro de publication internationale:
**WO 2016/203022 (22.12.2016 Gazette 2016/51)**

(54) **SYSTÈME DE SÉCURISATION D'UN DISPOSITIF DE SAISIE**

SYSTEM ZUM SCHUTZ EINER EINGABEVORRICHTUNG

SYSTEM FOR PROTECTING AN INPUT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2015 FR 1555626**

(43) Date de publication de la demande:
**25.04.2018 Bulletin 2018/17**

(73) Titulaire: **Ingenico Group**
**75015 Paris (FR)**

(72) Inventeurs:
• **JANOT, Cyril**
**21000 Dijon (FR)**

• **SOUBIRANE, Alain**
**26500 Bourg-les-valence (FR)**
• **GEORGES, Didier**
**26120 Chabeuil (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 1 826 702     FR-A1- 2 860 643**
**US-A1- 2007 062 791**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### 1. Domaine

La technique proposée se rapporte au domaine des dispositifs électroniques. Plus particulièrement, la technique proposée se rapporte aux dispositifs électroniques qui requièrent des fonctions de sécurisation. La technique proposée se rapporte plus particulièrement au domaine des ensembles de sécurisation implémentant une technique de sécurisation connue sous le nom de « fausse touche ». La technique proposée s'applique en particulier à des dispositifs de saisie tels que les terminaux de paiement.

### 2. Art Antérieur

Pour les dispositifs de saisie tels que les terminaux de paiement, il est nécessaire de se protéger contre des tentatives de fraudes. Ainsi, des mesures de protections sont mises en oeuvre. Ces mesures de protection sont soit des mesures de protection matérielles soit des mesures de protection logicielles. Parmi les mesures de protection matérielles, on trouve notamment les techniques destinées à détecter le démontage du dispositif.

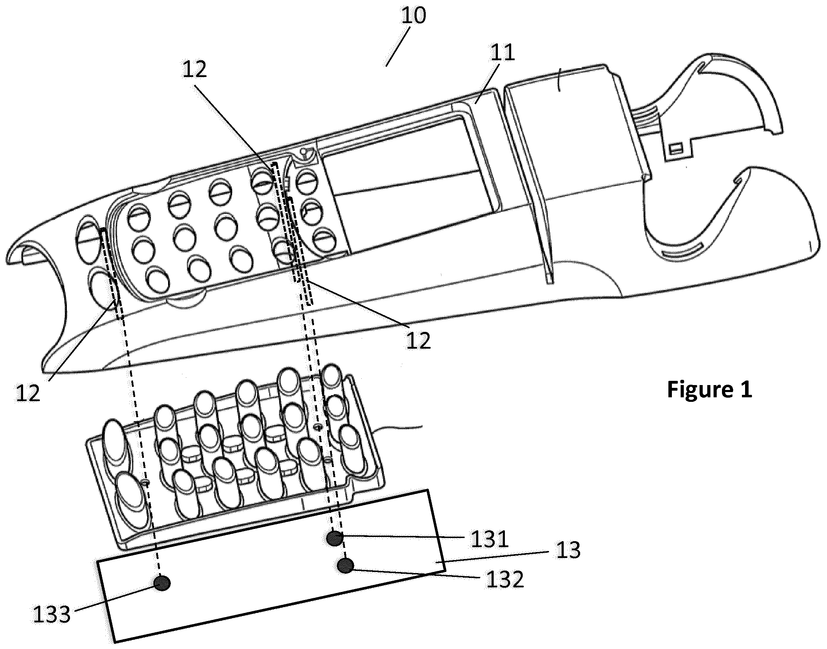

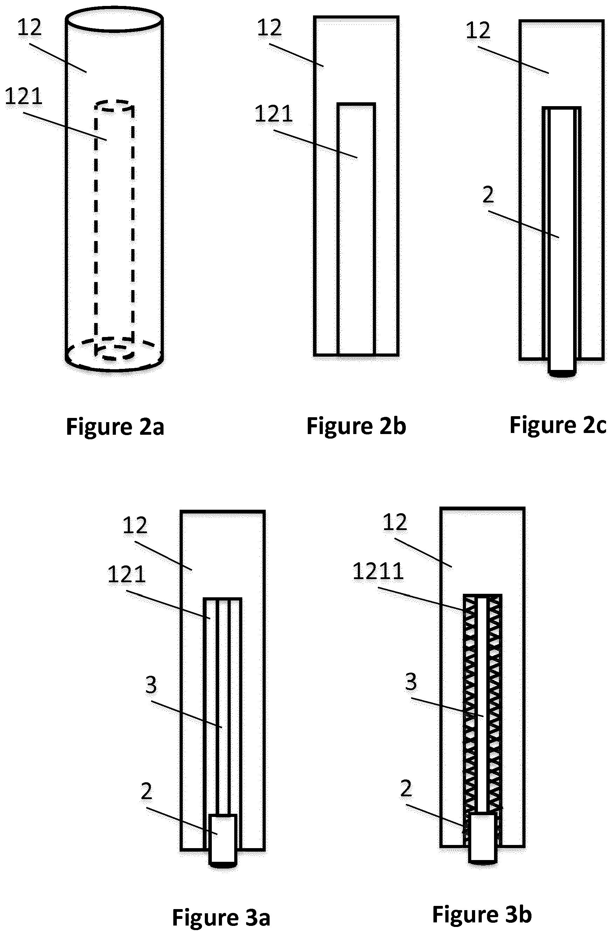

On connaît les techniques de « fausses touches » qui sont utilisées pour renforcer la sécurité et vérifier que le terminal ne subit pas une tentative de démontage. Comme illustré en relation avec la figure 1, un terminal de paiement 10 comprend de manière classique, un boîtier comprenant une demi-coque supérieure 11 et une demi-coque inférieure (non-illustrée), et une carte de circuit imprimé 13 à l'intérieur du boîtier. Le terminal de paiement comprenant un système de sécurisation de « fausse touche ». Le système de sécurisation comprend trois dispositifs de mise sous pression 12 et trois fausses touches 131, 132, 133 disposée sur une carte de circuit imprimé 13. Comme illustré en relation avec les figures 2a, 2b et 2c, le dispositif de mise sous pression 12 comprenant un tube 121 qui reçoit un élément souple de mise sous pression 2. Lorsque le terminal de paiement 10 est monté, les fausses touches 131, 132, 133 sont pressées par les éléments souples de mise sous pression 2. Ceci permet de s'assurer que le terminal 10 de paiement n'est pas ouvert et donc qu'il n'y a pas de tentative d'introduction d'un dispositif espion au niveau du clavier du terminal de paiement par exemple.

Cette solution de sécurisation de l'art antérieur est inefficace lorsque les deux demi-coques sont légèrement espacées. On constate qu'une légère séparation des deux demi-coques ne permet pas d'entrainer une diminution suffisante de la pression des éléments souples de mise sous pression exercée sur la fausse touche. Une intrusion au sein du dispositif par une légère séparation des deux demi-coques ne pourrait pas être détectée par le système de sécurisation.

Il existe un besoin de résoudre ce problème de l'état de la technique.

Les documents FR-2860643, EP-1826702-A1 et US2007/0062791-A1 divuguent différents mécanismes de protection contre les attaques physiques de dispositifs de saisie. Ces mécanismes anti-intrusion se basent sur l'utilisation d'une fausse touche intégrée dans le dispositif.

### 3. Résumé

La présente divulgation permet de résoudre le problème posé de l'état de la technique. En effet, il est décrit un système de sécurisation d'un dispositif de saisie, comprenant un dispositif de mise sous pression et un circuit imprimé comprenant une fausse touche, ledit dispositif de mise sous pression comprenant un tube recevant un élément souple de mise sous pression. Un tel système comprend une entretoise de longueur prédéterminée, ladite entretoise étant disposée au fond dudit tube.

Ainsi, la longueur de l'élément souple de mise sous pression peut être réduite. Par ailleurs, une telle entretoise peut avantageusement être utilisée lors d'une maintenance d'un dispositif de saisie afin de remplacer un élément de mise sous pression de longueur trop importante.

Selon une caractéristique particulière, ladite entretoise a une longueur ajustable.

Ainsi, l'entretoise peut s'adapter aux aléas de fabrication des éléments souples de mise sous pression et des tubes des dispositifs souples de mise sous pression.

Selon une caractéristique particulière, ladite entretoise comprend un élément mâle et un élément femelle, une cavité de profondeur prédéterminée étant disposée à une extrémité dudit élément femelle de manière qu'une extrémité dudit élément mâle peut être insérée dans ladite cavité.

Selon un mode de réalisation particulier, au moins une portion à une extrémité dudit élément mâle est filetée, et en ce que ladite cavité dudit élément femelle possède un filet intérieur, ledit filet intérieur pouvant coopérer avec ladite portion filetée dudit élément mâle.

Ainsi, l'entretoise peut être utilisée dans les dispositifs de mise sous pression de tailles différentes.

Selon une caractéristique particulière, ladite entretoise comprend deux éléments mâles, une autre extrémité dudit élément femelle comprenant aussi une cavité possédant un filet.

Selon une caractéristique particulière, au moins un treillis de sécurisation est disposé à une surface intérieure dudit tube.

Ainsi, le dispositif de mise sous pression permet de détecter les attaques au système de sécurisation

Selon une caractéristique particulière, ladite entretoise est un détecteur d'intrusion.

Ainsi, le dispositif de mise sous pression permet de détecter les intrusions des sondeurs autour du dispositif de mise sous pression.

Selon une caractéristique particulière, ledit détecteur d'intrusion est un détecteur capacitif.

Selon un autre aspect, la technique proposée porte également sur un terminal de paiement comprenant un boîtier. Selon une caractéristique particulière, ledit terminal comprend au moins un système de sécurisation tel que décrit précédemment.

**4. figures**

D'autres caractéristiques et avantages apparaîtront plus clairement à la lecture de la description suivante d'un mode de réalisation particulier, donné à titre de simple exemple illustratif et non limitatif, et des dessins annexés, parmi lesquels :

- la figure 1, déjà commentée, est une vue schématique d'un terminal de paiement implémentant un système de sécurisation de l'état de la technique ;
- la figure 2a, déjà commentée, illustre le corps d'un dispositif de mise sous pression de l'état de la technique ;
- la figure 2b, déjà commentée, est une vue en coupe du dispositif de mise sous pression de la figure 2a.
- la figure 2c, déjà commentée, est une vue en coupe d'un dispositif de mise sous pression recevant un élément souple de mise sous pression ;
- la figure 3a est une vue en coupe d'un dispositif de mise sous pression comprenant une entretoise selon un mode de réalisation de la technique proposée ;
- la figure 3b est une vue en coupe d'un dispositif de mise sous pression comprenant un treillis de sécurisation ;
- les figures 4a, 4b et 4c illustrent une entretoise ayant deux hauteurs différentes ;
- la figure 5a illustre une entretoise de hauteur ajustable ;
- la figure 5b illustre une variation de l'entretoise de la figure 5a.

**5. Description**

Principe général

Lorsqu'un dispositif de saisie comprend un système de sécurisation de type « fausse touche » de l'art antérieur, on constate des échecs ou des retards de détection des intrusions : une légère séparation des deux demi-coques du dispositif de saisie ne permet souvent pas de détecter une ouverture. En effet, une légère séparation des deux demi-coques ne permet pas toujours d'entrainer une diminution suffisante de la pression exercée sur les fausses touches par les éléments souples de mise sous pression. Ces éléments souples de mises sous pression sont également appelés des « pucks » (de l'anglais pour « palet ». Un « puck » est un cylindre en matière souple et déformable et parfois électriquement conductrice qui permet de mettre en contact, sur un circuit imprimé, un anneau externe et un anneau interne. Lorsqu'une pression suffisante est exercée sur le « puck », le courant électrique passe entre l'anneau interne et l'anneau externe de la fausse touche. Quand le courant passe correctement dans cette fausse touche, le terminal s'auto diagnostique comme étant dans un état de fonctionnement correct. Il se peut également que la matière ne soit pas électriquement conductrice, auquel cas un dôme métallique est adjoint au puck afin de remplir la fonction de conduction de courant entre l'anneau externe et l'anneau interne de la fausse touche.

Il se trouve que le « puck », de par sa nature déformable, est en mesure de continuer à exercer un contact électrique même lorsque la pression diminue. Une diminution de la pression est généralement le signe d'une ouverture. Or plus le puck est long (c'est-à-dire plus le cylindre est grand), plus il est nécessaire de disposer d'un espace important pour qu'une pression cesse de s'exercer, ce qui est un problème puisque l'on cherche justement, par l'utilisation du puck, à détecter l'absence de pression plus efficacement.

Or, il est fréquent que la longueur du puck soit relativement élevée : ceci est dû au fait que la distance entre l'intérieur d'une demi-coque et le circuit imprimé sur lequel la fausse touche est située est plus ou moins importante (souvent entre 10 mm et 40 mm, selon l'épaisseur du terminal). Ainsi, le tube qui s'étend par exemple de l'intérieur d'une demi coque externe du terminal jusqu'à une carte de circuit imprimée possède également une longueur relativement élevée.

Les inventeurs ont ainsi recherché une solution permettant d'augmenter la variation de la force de pression lorsque l'élément souple de mise sous pression subit une légère déformation. La loi de Hooke permet d'évaluer le comportement des solides soumis à une déformation de faible amplitude. C'est une loi élastique linéaire. Selon la loi de *Hook,* la force de traction/compression F respecte la formule ci-dessous :

$$F = k \times \Delta l \quad (1)$$

où k est la raideur de la pièce et $\Delta l$ est la variation de longueur de la pièce.

Lorsque l'élément souple est pressé sur une fausse touche, l'élément souple subit une compression de longueur $\Delta l$. La force exercée sur la fausse touche est par conséquent égale à $k \times \Delta l$. Pour une longueur de compression déterminée, plus la raideur *k* est grande, plus la variation de la force est grande. Pour un dispositif de saisie implémentant un système de sécurisation de type « fausses touches », une légère séparation de la demi-coque supérieure entraine une légère diminution de la longueur de compression de l'élément souple de mise sous pression. Plus la raideur *k* est grande, plus la diminution de la force de pression est diminuée. Afin de mieux détecter une légère séparation de la demi-coque supérieure, il est ainsi souhaitable que la diminution de la force de pression soit grande.

La raideur *k* est la caractéristique qui indique la résistance à la déformation élastique d'un corps. Dans le cas d'une barre de section constante chargée en traction-compression, la raideur *k* s'exprime en fonction du module de *Young (E)* :

$$k = \frac{A \times E}{L} \ (2)$$

où

    *A* est l'aire de la section de la barre ou de la poutre ;
    *E* est le module d'élasticité en traction-compression ;
    *L* est la longueur de la barre ou de la poutre.

Le module d'élasticité est une grandeur intrinsèque d'un matériau. Il est constant pour un matériau déterminé : pour le matériau souple et déformable utilisé, le module *E* est souvent compris entre 6 et 7 MPa. Pour obtenir une raideur plus grande, il est ainsi nécessaire soit d'augmenter l'aire de la section (*A*) de l'élément souple, soit de diminuer la longueur (*L*) de l'élément souple de mise sous pression. Pour les raisons de la compacité du dispositif et du coût de fabrication, il n'est pas souhaitable d'augmenter l'aire de la section de l'élément souple : le diamètre de l'élément souple est traditionnellement de l'ordre de 2 à 4 mm. Par conséquent, il est plus intéressant de diminuer la longueur des éléments souples de mise sous pression afin d'obtenir une raideur plus grande pour améliorer la sensibilité à l'ouverture. Une solution aurait également pu consister à augmenter le module d'élasticité *E* de l'élément souple. Une telle augmentation, cependant d'une part n'est pas aisée et d'autre part est plus onéreuse. En effet, les éléments souples de type « puck » sont constitués d'un mélange d'élastomère et/ou de silicone. Le mélange est en outre parfois conducteur. Ce type de matériau est standard dans l'industrie et le prix de ce matériau est maitrisé. Une modification du module d'élasticité entraine donc un surcout qui n'est pas nécessairement intéressant. Ainsi, il est plus efficace, en termes de cout et de process, de diminuer la longueur du « puck ». Une solution simple consisterait, à la fabrication, à remplir de plastique une portion plus ou moins grande du tube. Les inventeurs ont cependant déterminé que cette solution, simple, ne permettrai pas de se conformer à l'ensemble des contraintes de sécurités imposées au dispositif (et notamment au terminal de paiement).

Ainsi, le principe général de la technique proposée concerne une solution permettant de réduire la longueur de l'élément souple de mise sous pression. Plus précisément, la technique proposée consiste à utiliser une entretoise, en matériau rigide, pour remplacer une partie de l'élément souple de mise sous pression.

La technique proposée permet à un système de sécurisation de type « fausse touche », de détecter, de manière plus sensible, les intrusions par un démontage du boîtier.

<u>Modes de réalisation</u>

La figure 3a est une vue en coupe d'un dispositif de mise sous pression 12 comprenant un tube 121, un élément souple de mise sous pression 2 et une entretoise 3. L'entretoise 3 est disposée au fond du tube. Dans ce mode de réalisation, tel que représenté en figure 3a et suivantes, le tube est droit. L'entretoise occupe une partie de l'espace à l'intérieur du tube. Une extrémité d'un élément souple de mise sous pression 2 est appliquée en appui contre l'entretoise et l'autre extrémité de l'élément souple de mise sous pression s'étend à l'extérieur du tube. Ainsi, la longueur de l'élément souple de mise sous pression peut être réduite, car il n'est plus inséré jusqu'au fond du tube. Dans un système de sécurisation de « fausses touches », l'autre extrémité de l'élément souple de mise sous pression 2 presse sur une fausse touche disposée sur un circuit imprimé.

La figure 3b en une vue en coupe d'une variation du dispositif de mise sous pression 12 de la Figure 3a. Un treillis de sécurisation 1211 est par exemple disposé sur la surface intérieure du tube 121 du dispositif de mise sous pression 12. Dans un système de sécurisation, le treillis peut être raccordé à un module de sécurité pour détecter les attaques du système de sécurisation, en particulier lorsqu'un attaquant tente de couper le dispositif de mise sous pression pour désactiver le système de sécurisation : une telle attaque consiste à réaliser une section du tube et à maintenir une pression suffisante sur la partie sectionnée qui reste en contact avec le circuit imprimé. La présence d'un treillis de sécurisation permet d'éviter une telle attaque car toute tentative de découpage d'une section du tube entraine une altération du treillis, altération qui peut ainsi déclencher la mise en oeuvre d'une ou plusieurs mesures de sécurité.

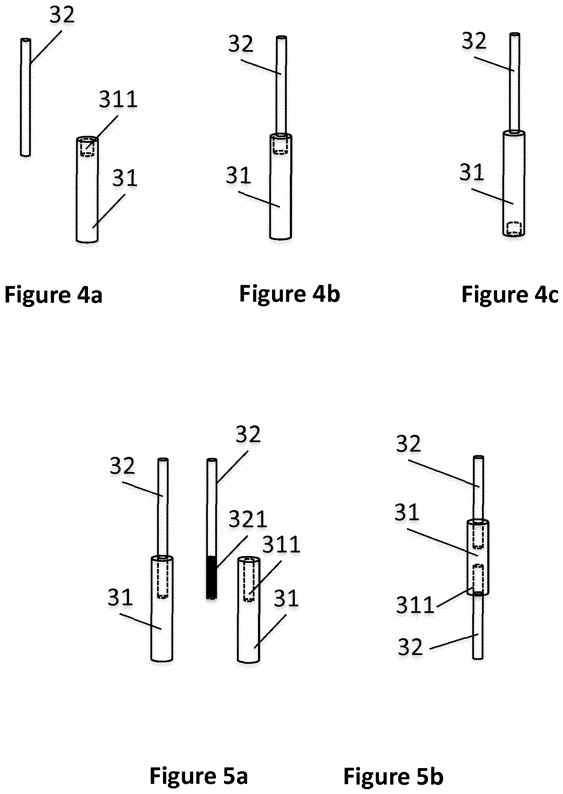

Les figures 4a, 4b et 4c illustrent une entretoise 3 ayant deux hauteurs différentes. Cette entretoise 3 comprend un élément mâle 32 et un élément femelle 31. Une cavité 311 de profondeur prédéterminée est disposée à une extrémité dudit élément femelle 31. De préférence, la profondeur de la cavité 311 est de quelques millimètres. Une extrémité de l'élément mâle 32 peut être insérée dans la cavité 311. Ainsi, l'entretoise 3 peut avoir deux hauteurs différentes. La première hauteur est égale à la somme des hauteurs de l'élément mâle 32 et de l'élément femelle 31 (l'élément mâle 31 n'est pas inséré dans la cavité 311 de l'élément femelle 31 comme illustré en relation avec la figure 4c). La deuxième hauteur est égale à la première hauteur moins la profondeur de la cavité 311 (l'élément mâle 32 est inséré dans la cavité 311 de l'élément femelle 31 comme illustré en relation avec la figure 4b). En effet, pour les raisons liées à la fabrication, les hauteurs des éléments souples de mise sous pression 2 ne sont pas strictement identiques. Il en est de même pour les profondeurs des tubes 121 des dispositifs de mise sous pression 12. Les deux hauteurs permettent à l'entretoise de s'adapter mieux aux erreurs des tailles des éléments souples de mise sous pression 2 et/ou les tubes 121 des dispositifs de mise sous pression 12.

La figure 5a illustre une entretoise 3 de hauteur ajustable. L'entretoise 3 comprend un élément mâle 32 et un élément femelle 31. Une cavité 311 est disposée dans une extrémité dudit élément femelle 31. Une portion 321 à une extrémité dudit élément mâle 32 est filetée. La portion filetée 321 peut coopérer avec un filet intérieur sur la surface intérieure de la cavité 311 de l'élément femelle 31. La portion filetée de l'élément mâle 32 peut ainsi se déplacer dans la cavité de l'élément femelle. La hauteur de l'entretoise est ainsi ajustable. Selon une variation de l'entretoise de la figure 5a, l'entretoise peut comprendre un élément femelle 31 et deux élément mâle 32. Chaque élément mâle 32 comprend une portion filetée. L'élément femelle 31 comprend deux cavités à ses deux extrémités. Chaque cavité comprend un filet à sa surface intérieure. Les deux portions filetées des deux éléments mâles peuvent coopérer avec les filets des deux cavités d'élément femelle, et se déplacer dans les deux cavités. Ainsi, la hauteur de l'entretoise peut être configurée de manière plus précise et peut être utilisée dans les dispositifs de mise sous pression de tailles différentes.

Selon un mode de réalisation particulier de la technique proposée, l'entretoise est un détecteur d'intrusion. Par exemple, l'entretoise peut être un détecteur capacitif qui peut détecter les intrusions des sondeurs par les variations capacitives autour du dispositif de mise sous pression.

Dans certains modes de réalisation, le tube est de forme conique, avec un fût de diamètre légèrement supérieur à la base (3mm au fût et 2 mm à la base). Dès lors, les formes de l'entretoise et du puck sont adaptées à la forme du tube. Une telle configuration se présente par exemple lorsque le tube est directement moulé dans le plastique, lors de la fabrication de la demi-coque du dispositif (par exemple le terminal) au sein duquel il prend place. Dans d'autres modes de réalisation, le tube est disjoint de la demi-coque et fait l'objet d'une fabrication séparée : le tube peut par exemple être un tube métallique qui est vissé sur une extension adaptée de la demi-coque au moment du montage du dispositif (par exemple le terminal) au sein duquel il prend place.

**Revendications**

1. Système de sécurisation d'un dispositif de saisie, comprenant un dispositif de mise sous pression (12) et un circuit imprimé (13) comprenant une fausse touche (131,132, 133), ledit dispositif de mise sous pression (12) comprenant un tube (121) recevant un élément souple de mise sous pression (2), ledit système étant **caractérisé en ce qu'**il comprend une entretoise (3) de longueur prédéterminée, ladite entretoise étant disposée au fond dudit tube (121).

2. Système de sécurisation selon la revendication 1, **caractérisé en ce que** ladite entretoise (3) a une longueur ajustable.

3. Système de sécurisation selon la revendication 2, **caractérisé en ce que** ladite entretoise (3) comprend un élément mâle (32) et un élément femelle (31), une cavité (311) de profondeur prédéterminée étant disposée à une extrémité dudit élément femelle (31) de manière qu'une extrémité dudit élément mâle (32) peut être insérée dans ladite cavité (311).

4. Système de sécurisation selon la revendication 3, **caractérisé en ce qu'**au moins une portion (321) à une extrémité dudit élément mâle (32) est filetée, et **en ce que** ladite cavité (311) dudit élément femelle (31) possède un filet intérieur, ledit filet intérieur pouvant coopérer avec ladite portion filetée (321) dudit élément mâle (32).

5. Système de sécurisation selon la revendication 3, **caractérisé en ce que** ladite entretoise (3) comprend deux éléments mâle (32), une autre extrémité dudit élément femelle comprenant aussi une cavité possédant un filet.

6. Système de sécurisation une quelconque des revendications 1 à 5, **caractérisé en ce que** au moins un treillis de sécurisation (1211) est disposé à une surface intérieure dudit tube (121).

7. Système de sécurisation selon une quelconque des revendications 1 à 5, **caractérisé en ce que** ladite entretoise est un détecteur d'intrusion.

8. Système de sécurisation selon la revendication 6, **caractérisé en ce que** ledit détecteur d'intrusion est un détecteur capacitif.

9. Terminal de paiement comprenant un boîtier, **caractérisé en ce qu'**il comprend un système de sécurisation selon une quelconque des revendications 1 à 8.

**Patentansprüche**

1. System zum Sichern einer Eingabevorrichtung, umfassend eine Druckbeaufschlagungsvorrichtung (12) und eine gedruckte Schaltung (13), die eine falsche Taste (131, 132, 133) aufweist, wobei die Druckbeaufschlagungsvorrichtung (12) ein Rohr (121) aufweist, das ein flexibles Druckbeaufschlagungselement (2) aufnimmt, wobei das System **da-**

**durch gekennzeichnet ist, dass** es einen Abstandhalter (3) von vorbestimmter Länge aufweist, wobei der Abstandhalter am Boden des Rohrs (121) angeordnet ist.

2. System zum Sichern nach Anspruch 1, **dadurch gekennzeichnet, dass** der Abstandhalter (3) eine verstellbare Länge aufweist.

3. System zum Sichern nach Anspruch 2, **dadurch gekennzeichnet, dass** der Abstandhalter (3) ein Einsteckelement (32) und ein Aufnahmeelement (31) aufweist, wobei ein Hohlraum (311) von vorbestimmter Tiefe an einem Ende des Aufnahmeelements (31) derart angeordnet ist, dass ein Ende des Einsteckelements (32) in den Hohlraum (311) eingefügt werden kann.

4. System zum Sichern nach Anspruch 3, **dadurch gekennzeichnet, dass** mindestens ein Abschnitt (321) an einem Ende des Einsteckelements (32) mit einem Gewinde versehen ist, und dadurch, dass der Hohlraum (311) des Aufnahmeelements (31) ein Innengewinde aufweist, wobei das Innengewinde mit dem Gewindeabschnitt (321) des Einsteckelements (32) zusammenwirkt.

5. System zum Sichern nach Anspruch 3, **dadurch gekennzeichnet, dass** der Abstandhalter (3) zwei Einsteckelemente (32) aufweist, wobei ein anderes Ende des Aufnahmeelements auch einen Hohlraum mit einem Gewinde aufweist.

6. System zum Sichern nach einem der Ansprüche 1 bis 5, **dadurch gekennzeichnet, dass** mindestens ein Sicherungsgitter (1211) an einer Innenfläche des Rohrs (121) angeordnet ist.

7. System zum Sichern nach einem der Ansprüche 1 bis 5, **dadurch gekennzeichnet, dass** der Abstandhalter ein Einbruchsensor ist.

8. System zum Sichern nach Anspruch 6, **dadurch gekennzeichnet, dass** der Einbruchsensor ein kapazitiver Sensor ist.

9. Zahlungsendgerät, umfassend ein Gehäuse, **dadurch gekennzeichnet, dass** es ein System zum Sichern nach einem der Ansprüche 1 bis 8 aufweist.

**Claims**

1. System for protecting an input device, comprising a pressurizing device (12) and a printed circuit board (13) comprising a false key (131,132, 133), said pressurizing device (12) comprising a tube receiving a flexible pressurizing element, said system being **characterized in that** it comprises a spacer (3) of predetermined length, said spacer being positioned at the bottom of said tube (121).

2. System for protecting according to claim 1, **characterized in that** said spacer (3) has an adjustable length.

3. System for protecting according to claim 2, **characterized in that** said spacer (3) comprises a male element (32) and a female element (31), a cavity (311) of predetermined depth being disposed at one extremity of said female element (31) so that one extremity of said male element (32) can be inserted into said cavity (311).

4. System for protecting according to claim 3, **characterized in that** at least one portion (321) at one extremity of said male element (32) is threaded and **in that** said cavity (311) of said female element (31) has an internal thread, said internal thread being able to cooperate with said threaded portion (321) of said male element (32).

5. System for protecting according to claim 3, **characterized in that** said spacer (3) comprises two male elements (32), another extremity of said female element also comprising a cavity possessing a thread.

6. System for protecting according to any one of the claims 1 to 5, **characterized in that** at least one protective mesh (1211) is disposed on an internal surface of said tube (121).

7. System for protecting according to any one of the claims 1 to 5, **characterized in that** said spacer is an intrusion detector.

8. System for protecting according to claim 6, **characterized in that** said intrusion detector is a capacitive detector.

9. Payment terminal comprising a housing, **characterized in that** it comprises a system for protecting according to one of the claims 1 to 8.

**Figure 1**

10

11

12

12

12

131

132

13

133

**Figure 2a**          **Figure 2b**          **Figure 2c**

**Figure 3a**          **Figure 3b**

**Figure 4a**     **Figure 4b**     **Figure 4c**

**Figure 5a**     **Figure 5b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2860643
- EP 1826702 A1
- US 20070062791 A1